(19) **Europäisches Patentamt**
**European Patent Office**
**Office européen des brevets**

(11) **EP 3 213 024 B1**

(12) **FASCICULE DE BREVET EUROPEEN**

(45) Date de publication et mention
de la délivrance du brevet:
**22.08.2018 Bulletin 2018/34**

(21) Numéro de dépôt: **15791715.4**

(22) Date de dépôt: **23.10.2015**

(51) Int Cl.:
*F28F 3/02* *(2006.01)*   *F02M 35/12* *(2006.01)*
*F01N 1/02* *(2006.01)*   *F02C 7/045* *(2006.01)*
*F02C 7/12* *(2006.01)*   *F02C 7/24* *(2006.01)*
*F28D 1/03* *(2006.01)*   *F28D 9/00* *(2006.01)*
*F28D 21/00* *(2006.01)*

(86) Numéro de dépôt international:
**PCT/FR2015/052856**

(87) Numéro de publication internationale:
**WO 2016/066936 (06.05.2016 Gazette 2016/18)**

(54) **PANNEAU D'ÉCHANGE THERMIQUE ET DE RÉDUCTION DE BRUIT AMÉLIORÉE POUR UNE TURBOMACHINE**

PLATTE FÜR WÄRMEAUSTAUSCH UND VERBESSERTE GERÄUSCHREDUZIERUNG EINER TURBOMASCHINE

PANEL FOR HEAT EXCHANGE AND IMPROVED NOISE REDUCTION FOR A TURBOMACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.10.2014 FR 1460375**

(43) Date de publication de la demande:
**06.09.2017 Bulletin 2017/36**

(73) Titulaire: **Safran Aircraft Engines**
**75015 Paris (FR)**

(72) Inventeurs:
• **WAISSI, Bellal**
**77550 Moissy-Cramayel Cedex (FR)**
• **CHALAUD, Sébastien**
**77550 Moissy-Cramayel Cedex (FR)**
• **GUILLOU, Lancelot**
**77550 Moissy-Cramayel Cedex (FR)**
• **MARDJONO, Jacky, Novi**
**77550 Moissy-Cramayel Cedex (FR)**
• **MATHON-MARGUERITTE, Guillaume**
**77550 Moissy-Cramayel Cedex (FR)**
• **RIOU, Georges, Jean, Xavier**
**77550 Moissy-Cramayel Cedex (FR)**
• **SENSIAU, Claude**
**77550 Moissy-Cramayel Cedex (FR)**

(74) Mandataire: **Gevers & Orès**
**41 avenue de Friedland**
**75008 Paris (FR)**

(56) Documents cités:
EP-A2- 1 612 769     EP-A2- 1 916 399
US-A1- 2009 317 238     US-A1- 2011 303 398

**Description**

DOMAINE TECHNIQUE

La présente invention concerne un panneau d'échange thermique et de réduction de bruit pour une turbomachine, en particulier d'aéronef selon le préambule de la revendication 1. US 2011/303398 divulgue un tel panneau.

ETAT DE L'ART

Une turbomachine, telle qu'un turboréacteur à double flux, comprend classiquement une entrée d'air comportant une soufflante dont le flux d'air en sortie se divise en un flux d'air qui pénètre dans le moteur et forme un flux chaud ou flux primaire, et en un flux d'air qui s'écoule autour du moteur et qui forme un flux froid ou flux secondaire.

Le moteur comprend typiquement d'amont en aval, dans le sens d'écoulement des gaz, au moins un compresseur, une chambre de combustion, au moins une turbine, et une tuyère d'éjection dans laquelle les gaz de combustion sortant de la turbine et formant le flux primaire sont mélangés au flux secondaire.

La soufflante de la turbomachine est entourée par un carter de soufflante qui est intégré à la nacelle de la turbomachine. Il est connu de tapisser la surface interne de ce carter avec des panneaux acoustiques pour limiter la propagation du bruit généré par la soufflante.

Le carter peut également être équipé d'échangeurs thermiques surfaciques à huile du type SACOC (acronyme de l'anglais *Surface Air Cooled Oil Cooler*). Un échangeur de ce type comprend une surface externe destinée à être balayée par le flux d'air secondaire et sur laquelle sont situées des ailettes, et au moins une chambre de circulation d'huile s'étendant sous la surface externe. La surface externe est destinée à évacuer de l'énergie calorifique apportée par l'huile. Selon l'architecture du moteur, l'énergie calorifique de l'huile à dissiper peut être très importante, l'huile pouvant atteindre 160°C environ.

Certaines turbomachines comportent des nacelles relativement courtes en dimension longitudinale. Il y a donc moins de place pour installer les équipements et en particulier les échangeurs thermiques ainsi que les panneaux acoustiques servant à atténuer le bruit de la soufflante.

Ainsi, l'encombrement et l'intégration des équipements deviennent des problématiques majeures, en particulier l'installation d'échangeurs thermiques et de panneaux acoustiques dans la veine du flux secondaire.

On a déjà proposé, dans le document US-B1-8,544,531, d'intégrer les fonctions échangeur air/huile et traitement acoustique dans un même équipement pour ne plus avoir de compétition entre les deux besoins sur une zone d'installation.

La présente invention propose un perfectionnement à cette technologie, qui permet notamment d'optimiser la conception et l'agencement des fonctions d'échange thermique air/huile et de traitement acoustique sur une zone d'installation.

EXPOSE DE L'INVENTION

L'invention propose un panneau d'échange thermique et de réduction de bruit pour une turbomachine, en particulier d'aéronef, le panneau comprenant :

- une surface externe destinée à être balayée par un flux d'air et à partir de laquelle s'étendent des ailettes, suivant une première et une deuxième directions principales prédéterminées, de préférence sensiblement perpendiculaires,
- des cavités formant résonateurs de Helmholtz, reliées à des premières extrémités de canaux de passage d'air dont des secondes extrémités communiquent avec ledit flux d'air, de sorte que lesdits canaux forment des cols desdits résonateurs de Helmholtz s'étendant sensiblement suivant la première direction des ailettes,
- au moins une chambre de circulation d'huile s'étendant entre ladite surface externe et ladite au moins une cavité, et destinée à évacuer de l'énergie calorifique apportée par l'huile,

l'empilement de ladite surface externe, de ladite au moins une cavité et de ladite au moins une chambre s'étendant sensiblement suivant la première direction prédéterminée,
caractérisé en ce que lesdits canaux sont au moins en partie formés dans lesdites ailettes.

Dans la présente demande, on entend par résonateur de Helmholtz un système acoustique comprenant un col, en général de petite taille, raccordée à une cavité de plus grand taille et pouvant entrer en résonance. Le col assure la communication entre les ondes sonores à atténuer et la cavité. Une fois le système optimisé, le col assure la dissipation visco-thermique (mouvements rapides et alternés des ondes sonores au travers des cols qui dissipent l'énergie sonore par frottement). L'accord en fréquence, c'est-à-dire l'optimisation qui permet de générer ces vitesses maximales aux fréquences à atténuer, se fait majoritairement via le volume des cavités résonantes, c'est-à-dire leurs dimensions et en particulier leur hauteur. On précisera que, vu l'environnement thermique, les températures locales pourront être prisent en compte pour optimiser correctement le système.

L'invention propose ainsi de combiner les fonctions précitées d'échangeur thermique air/huile et de traitement acoustique dans un même équipement sous la forme d'un panneau. Par ailleurs, l'invention permet, pour une fréquence d'accord donnée, de diminuer l'encombrement des cavités d'air des résonateurs grâce à des canaux de bien plus grande longueur. D'un point de vue acoustique, pour optimiser le fonctionnement du système à fréquence donnée, l'allongement des cols (canaux) des résonateurs permet d'accroître la masse d'air en mouvement et de compenser ainsi le faible volume des cavités résonnantes. De plus, la réduction du volume des cavités résonantes a un impact positif sur l'équipement. En effet, il serait soit possible de réduire l'encombrement global de l'équipement, soit d'augmenter le volume de la chambre huile pour ainsi réduire la perte de pression générée par les canaux dans la chambre d'huile.

Le panneau selon l'invention peut comprendre une ou plusieurs des caractéristiques suivantes, prises isolément les unes des autres ou en combinaison les unes avec les autres :

- les ailettes sont sensiblement normales ou inclinées par rapport à la surface externe,
- lesdits canaux débouchent sur des parois des ailettes pour former des orifices de prélèvement d'air dudit flux d'air,
- chaque ailette est traversée par plusieurs canaux,
- les canaux ont une section de forme sensiblement rectangulaire, circulaire ou elliptique,
- le panneau a une forme générale incurvée et est configuré pour former un secteur d'une enveloppe annulaire d'échange thermique et de réduction de bruit, par exemple pour une nacelle de turbomachine,
- les canaux ont une section constante ou une forme générale évasée vers lesdites cavités,
- au moins certaines desdits cavités communiquent entre elles, et
- ladite première direction est sensiblement perpendiculaire à ladite surface externe ou inclinée par rapport à ladite surface externe.

La présente invention concerne également une turbomachine, en particulier d'aéronef, caractérisée en ce qu'elle comprend au moins un panneau tel que décrit ci-dessus.

DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :

- la figure 1 est une vue très schématique en perspective d'un panneau d'échange thermique et de réduction de bruit selon l'invention,
- la figure 2 est une vue en coupe et en perspective selon la ligne II-II de la figure 1,
- la figure 3 est une vue en coupe selon la ligne III-III de la figure 1,
- la figure 4 est une vue en coupe selon la ligne IV-IV de la figure 1,

- la figure 5 est une vue de dessus du panneau de la figure 1,
- les figures 6 à 9 sont des vues similaires à celle de la figure 4 et illustrant d'autres variantes de réalisation de l'invention, et
- les figures 10 et 11 sont des vues similaires à celle de la figure 5 et illustrant d'autres variantes de réalisation de l'invention.

DESCRIPTION DETAILLEE

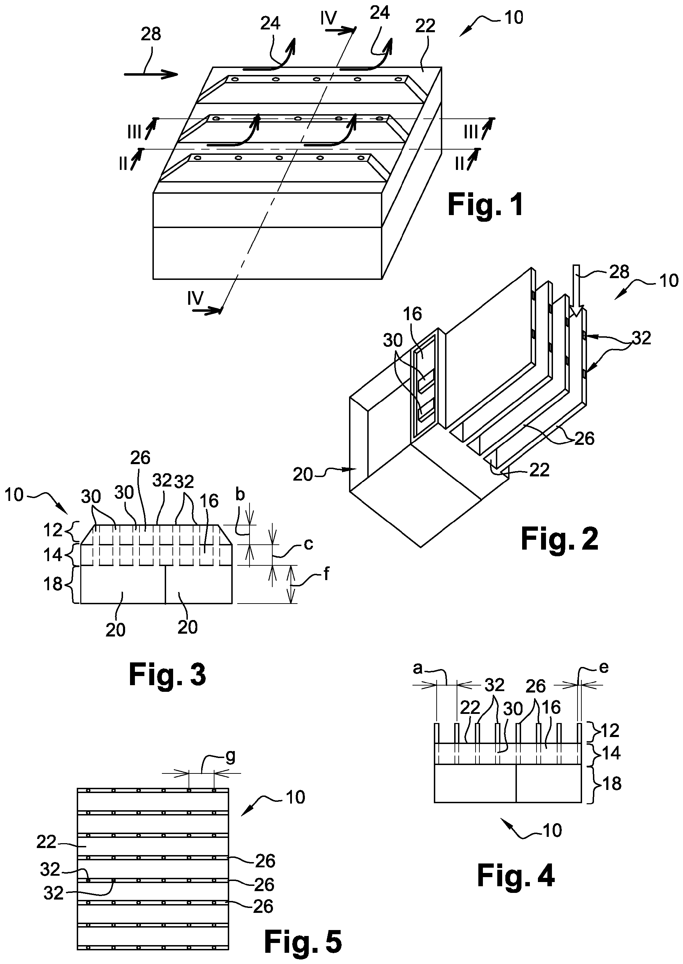

On se réfère d'abord aux figures 1 à 5 qui représente un mode de réalisation d'un panneau 10 selon l'invention d'échange thermique et de réduction de bruit pour une turbomachine d'aéronef.

Dans la description qui suit, les termes tels que « sous », «en dessous», « sur », « au-dessus », « supérieur », « inférieur », etc., s'entendent selon l'orientation des figures. De même, les dimensions sont exprimées en fonction de cette orientation des figures. Ainsi, une « hauteur » fait référence à une dimension qui s'étend verticalement ou du bas vers le haut (ou inversement), une « épaisseur », une « longueur » et une « largeur », voire une « distance », s'entendent comme des dimensions mesurées dans un plan sensiblement horizontal.

Le panneau 10 comprend essentiellement trois parties ou couches superposées à savoir :

- une partie externe 12 destinée à être exposée à un flux d'air de refroidissement, tel qu'un flux d'air secondaire de la turbomachine,
- une partie intermédiaire 14 comportant une chambre 16 de circulation d'huile à refroidir, et
- une partie interne 18 comportant des cavités d'air 20.

Les parties 12 et 14 forment un échangeur thermique surfacique du type SACOC et les parties 12, 14 et 18 forment un panneau acoustique à résonateurs de Helmholtz.

La partie externe 12 comprend une surface externe 22 qui est destinée à être balayée par le flux d'air 24 et sur laquelle sont situées des ailettes 26. Les ailettes 26 s'étendent suivant une première direction principale, ici verticale, ainsi que suivant une deuxième direction principale ici horizontale, à partir de la surface 24. Les première et deuxième directions sont sensiblement perpendiculaires. On définit la direction horizontale perpendiculaire aux première et deuxième directions, comme étant la troisième direction. De l'air circule entre les ailettes 26 qui sont notamment destinées à augmenter les surfaces d'échange thermique avec l'air. Dans l'exemple représenté, les ailettes 26 sont de préférence rectilignes, parallèles et indépendantes, c'est-à-dire qu'elles ne sont pas reliées entre elles. D'autres agencements sont toutefois envisageables, comme cela sera décrit plus loin. La surface externe 22 est représentée ici avec une forme sensiblement carrée ou rectangulaire d'aire ou de surface notée A. Bien que la surface 22 soit ici présentée comme plane elle pourrait avoir une forme incurvée en particulier lorsque le panneau 10 est incurvé pour faciliter son montage dans un carter annulaire de la turbomachine par exemple. Un panneau 10 de forme générale incurvée est configuré pour former un secteur d'une enveloppe annulaire d'échange thermique et de réduction de bruit, par exemple pour une nacelle de turbomachine.

Les ailettes 26 s'étendent sur sensiblement toute la longueur ou dimension longitudinale de la surface 22, suivant la seconde direction horizontale. Leur nombre est défini de manière connue, en fonction notamment des conditions d'échange à satisfaire.

La chambre 16 de circulation d'huile s'étend sous la surface externe 22, sur sensiblement toute son étendue. Elle est reliée à une entrée et à une sortie d'huile, qui ne sont pas représentées dans les dessins. La direction et le sens de circulation de l'huile dans la chambre peu(ven)t être le(s) même(s) que celui(ceux) de l'air sur la surface 22 (flèche 28) ou peu(ven)t être différent(s).

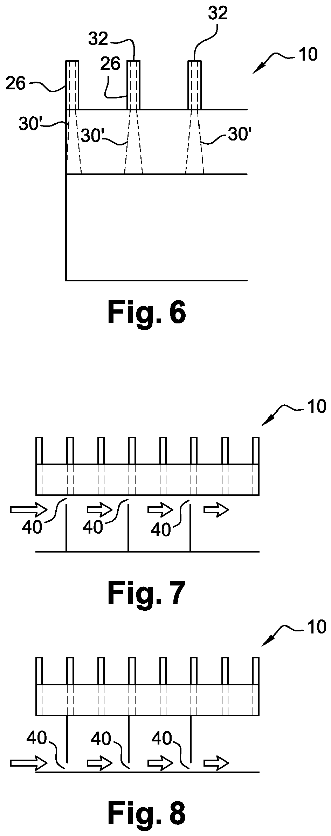

Les cavités d'air 20 de la troisième partie 18 sont situées sous la chambre d'huile 16. Elles sont de préférence régulièrement réparties et sensiblement identiques. Elles s'étendent les unes à côtés des autres dans un même plan sensiblement parallèle à la surface 22. Ces cavités 20 sont reliées à des extrémités longitudinales inférieures de canaux 30 de passage d'air dont les extrémités longitudinales supérieures forment des orifices 32 de communication avec la source sonore à atténuer. L'ensemble formé par les canaux 30 et les cavités 20 forment des résonateurs de Helmholtz, les canaux formant des cols et les cavités formant des cavités résonantes des résonateurs. Au moins certaines des cavités 20 peuvent communiquer entre elles, comme représenté sur les figures 7 et 8.

L'invention propose un panneau avec un encombrement réduit, grâce à la formation d'au moins une partie des canaux 30 dans les ailettes 26. Comme cela est visible dans l'exemple représenté, les canaux 30 ont des orientations sensiblement rectiligne et verticale et comprennent des parties inférieures s'étendant dans la chambre d'huile 16 et des parties supérieures s'étendant dans les ailettes 26. Par ailleurs, dans le cas particulier représenté, les canaux 30 ont leurs extrémités supérieures qui débouchent sur des parois des ailettes, en particulier sur les sommets ou extrémité libres supérieures des ailettes 26 et forment les orifices 32 de communication précités. Sur la figure 2, chaque ailette 26 est traversée par plusieurs canaux 30.

Préférentiellement, les canaux 30 sont répartis en matrice. Ainsi, les canaux 30 sont répartis en lignes et colonnes dans la chambre d'huile 26. Dans l'exemple représenté, chaque ailette 26 comprend une rangée d'orifices 32.

Le panneau 10 selon l'invention peut avoir les dimensions suivantes, qui sont optimisées pour atténuer le plus possible les fréquences acoustiques d'une turbomachine, à savoir celles comprises entre 400 et 2000HZ :

- les ailettes 26 ont une épaisseur e (c'est-à-dire une dimension suivant la troisième direction) comprise entre 0,5 et 2mm et sont espacées les unes des autres d'une distance a (suivant la troisième direction) comprise entre 1 et 5mm,
- la chambre d'huile 16 a une hauteur c (suivant la première direction verticale) comprise entre 1 et 10mm,
- les canaux 30 ont un diamètre moyen d compris entre 1 et 2mm,
- les cavités 20 ont une hauteur f (suivant la première direction verticale) comprise entre 5 et 150mm, et
- le taux de perforation σ de ladite surface externe est compris entre 5 et 10%. Ce taux de perforation est égal au rapport des sections cumulées des orifices 32 (n.π.(d/2)², n étant le nombre d'orifices 32 ou de canaux 30) avec l'aire A de la surface des résonateurs, que l'on considère comme sensiblement égale à la surface externe 22. La différence entre la surface externe et celle des résonateurs peut être négligeable. Les résonateurs sont séparés par des parois réduisant leur surface par rapport à la surface externe. Mais en première approximation, les deux surfaces sont équivalentes.

On entend par diamètre moyen, le diamètre d'un canal lorsqu'il est cylindrique, la moyenne des diamètres d'un canal lorsqu'il a une section circulaire non constante et qu'il est par exemple évasé ou tronconique, et le diamètre d'une section circulaire équivalente à la section du canal lorsque cette dernière n'est pas circulaire et est par exemple rectangulaire.

La fréquence d'accord d'un résonateur de Helmholtz peut être approximée par la formule suivante :

$$\text{Fréq. d'accord} = \frac{C}{2\pi}\sqrt{\frac{S}{Vl'}}$$

avec

C : célérité du son (m/s)
S section du col ($m^2$)
V volume du résonateur ($m^3$)
l' longueur de col corrigée (m) ou l'=l+δ

avec

l : longueur géométrique de col(m)
δ : correction de col

$$\begin{cases} \delta = 1.7r\left(1 - 0.7\sqrt{\sigma}\right) \\ \text{pour des résonateurs juxtaposés} \end{cases}$$

r : rayon d'un orifice (m)
σ : taux de perforation

Dans cette formule, la section du col S revient à la section précitée d'un orifice 32, le volume du résonateur V revient au volume d'une cavité 20, et la longueur de col l ou l' revient sensiblement à l'addition de l'épaisseur c de la chambre d'huile 16 et de la hauteur b des ailettes 26.

Avantageusement :

- les ailettes 26 ont une hauteur b (suivant la première direction verticale) comprise entre 10 et 25mm, et
- les orifices 32 sont, au sein d'une même rangée, sont espacés les uns des autres d'une distance g (suivant la deuxième direction) comprise entre 1,57 et 31,42mm. L'espacement entre les orifices de deux rangées adjacentes revient à l'espacement a (suivant la troisième direction) entre deux ailettes 26 adjacentes.

Les canaux 30 ont des axes longitudinaux sensiblement perpendiculaires à ladite surface externe 22 ou inclinés par rapport à ladite surface externe 22. Ils ont une forme générale longitudinale cylindrique à section constante ou parallélépipédique dans l'exemple représenté aux figures 1 à 5. Ils pourraient avoir une autre forme et par exemple tronconique ou évasée vers les cavités 20, comme représenté en figure 6. Les canaux 30' de la figure 6 ont une section d'entrée, c'est-à-dire une section prise à l'orifice 32 par lequel le canal 30 débouche à la surface 22, inférieure à leur section opposée dite de sortie. Les canaux 30 ont une section de forme sensiblement rectangulaire, circulaire ou elliptique. Ceci permet notamment de limiter la réduction de la largeur de bande fréquentielle d'atténuation induit par la longueur des canaux 30', c'est-à-dire par la hauteur de la chambre d'huile 16.

Par ailleurs, comme représenté aux figures 7 et 8, des passages d'air 40 pourraient être prévus entre les cavités résonantes 20 pour optimiser les échanges thermiques entre elles, au dépend de la performance acoustique. Cette option permet en outre de s'affranchir des problèmes liés aux dilatations des cloisons qui définissent les cavités 20. Ces passages d'air peuvent être situés au niveau des extrémités supérieures des cavités (figure 7) ou au niveau de leurs extrémités inférieures (figure 8).

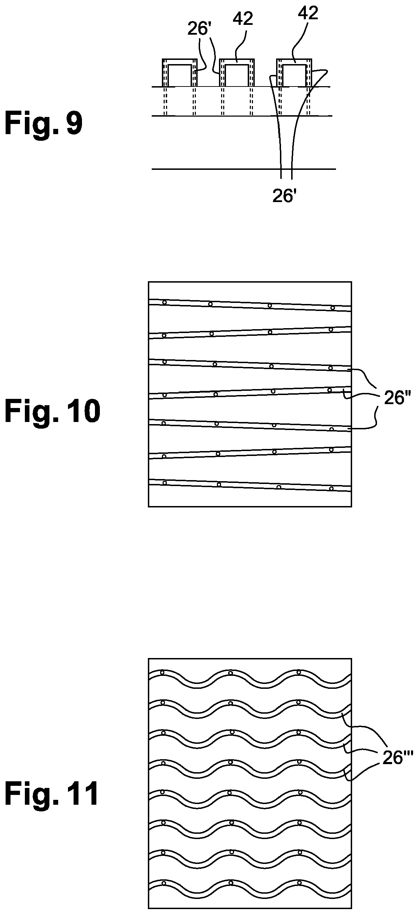

Les figures 8 à 10 représentent d'autres variantes d'agencement, dont les performances sont légèrement inférieures à celles d'ailettes rectilignes, parallèles et indépendantes. Dans la variante de la figure 8, les ailettes ne sont plus indépendantes mais sont au contraire liées entre elles deux à deux. L'extrémité supérieure de chaque ailette 26' est reliée par un pont de matière 42 à l'extrémité supérieure d'une ailette 26' adjacente. Dans la variante de réalisation de la figure 9, les ailettes 26" sont rectilignes mais non rigoureusement parallèles. Dans la variante de la figure 10, les ailettes 26''' sont de forme générale ondulée (non rectiligne) et globalement parallèles suivant la deuxième direction d'extension.

L'invention apporte une solution au réel besoin de trouver un moyen d'intégrer les fonctions échangeur air/huile et traitement acoustique dans un même équipement pour ne plus avoir de compétition entre les deux besoins sur une zone d'installation.

Bien que dans la description qui précède l'invention s'applique en particulier à une turbomachine d'aéronef, celle s'applique à tout type de turbomachine.

**Revendications**

1. Panneau (10) d'échange thermique et de réduction de bruit pour une turbomachine, en particulier d'aéronef, le panneau comprenant :

   - une surface externe (22) destinée à être balayée par un flux d'air et à partir de laquelle s'étendent des ailettes (26), suivant une première et une deuxième directions principales prédéterminées, de préférence sensiblement perpendiculaires,
   - des cavités (20) formant résonateurs de Helmholtz, reliées à des premières extrémités de canaux (30) de passage d'air dont des secondes extrémités communiquent avec ledit flux d'air, de sorte que lesdits canaux forment des cols desdits résonateurs de Helmholtz s'étendant sensiblement suivant la première direction des ailettes,
   - au moins une chambre (16) de circulation d'huile s'étendant entre ladite surface externe et ladite au moins une cavité, et destinée à évacuer de l'énergie calorifique apportée par l'huile,

   l'empilement de ladite surface externe, de ladite au moins une cavité et de ladite au moins une chambre s'étendant sensiblement suivant la première direction,
   **caractérisé en ce que** lesdits canaux sont au moins en partie formés dans lesdites ailettes.

2. Panneau (10) selon la revendication 1, dans lequel les ailettes (26) sont sensiblement normales ou inclinées par rapport à la surface externe (22).

3. Panneau (10) selon la revendication 1 ou 2, dans lequel lesdits canaux débouchent sur des parois des ailettes pour former des orifices (32) de communication avec la source sonore à atténuer.

4. Panneau (10) selon l'une des revendications précédentes, dans lequel chaque ailette (26) est traversée par plusieurs canaux (30).

5. Panneau (10) selon l'une des revendications précédentes, dans lequel les canaux (30) ont une section de forme sensiblement rectangulaire, circulaire ou elliptique.

**6.** Panneau (10) selon l'une des revendications précédentes, dans lequel il a une forme générale incurvée et est configuré pour former un secteur d'une enveloppe annulaire d'échange thermique et de réduction de bruit, par exemple pour une nacelle de turbomachine.

**7.** Panneau (10) selon l'une des revendications précédentes, dans lequel les canaux (30) ont une section constante ou une forme générale évasée vers lesdites cavités (20).

**8.** Panneau (10) selon l'une des revendications précédentes, dans lequel au moins certaines desdits cavités (20) communiquent entre elles.

**9.** Panneau (10) selon l'une des revendications précédentes, dans lequel lesdits canaux (30) ont des axes longitudinaux sensiblement perpendiculaires à ladite surface externe (22) ou inclinés par rapport à ladite surface externe (22).

**10.** Turbomachine, en particulier d'aéronef, **caractérisée en ce qu'**elle comprend au moins un panneau (10) selon l'une des revendications précédentes.

**Patentansprüche**

**1.** Platte (10) zum Wärmetausch und zur Geräuschminderung für eine Turbomaschine, im Speziellen eines Luftfahrzeugs, wobei die Platte umfasst:

- eine externe Oberfläche (22), die dazu bestimmt ist, von einem Luftstrom überzogen zu werden und aus der sich Rippen (26) in erste und zweite vorbestimmte Hauptrichtungen, vorzugsweise im Wesentlichen senkrechte Richtungen erstrecken,
- Hohlräume (20), die Helmholtz-Resonatoren bilden, die an erste Enden von Luftdurchgangskanälen (30) angeschlossen sind, wobei zweite Enden von diesen mit dem Luftstrom kommunizieren, sodass die Kanäle Hälse der Helmholtz-Resonatoren bilden, die sich im Wesentlichen entlang der ersten Richtung der Rippen erstrecken,
- mindestens eine Ölzirkulationskammer (16), die sich zwischen der externen Oberfläche und dem mindestens einen Hohlraum erstreckt, und dazu bestimmt ist, Wärmeenergie, die von dem Öl eingebracht wird, abzuführen,

wobei sich die Stapelung der externen Oberfläche, des mindestens einen Hohlraumes und der mindestens einen Kammer im Wesentlichen entlang der ersten Richtung erstreckt,

**dadurch gekennzeichnet, dass** die Kanäle mindestens teilweise in den Rippen gebildet werden.

**2.** Platte (10) nach Anspruch 1, wobei die Rippen (26) im Wesentlichen normal oder geneigt im Verhältnis zur externen Oberfläche (22) sind.

**3.** Platte (10) nach Anspruch 1 oder 2, wobei die Kanäle in Wände der Rippen münden, um Öffnungen (32) zur Kommunikation mit der zu vermindernden Geräuschquelle zu bilden.

**4.** Platte (10) nach einem der vorstehenden Ansprüche, wobei jede Rippe (26) von mehreren Kanälen (30) durchquert wird.

**5.** Platte (10) nach einem der vorstehenden Ansprüche, wobei die Kanäle (30) einen Querschnitt in einer im Wesentlichen rechteckigen, kreisrunden oder elliptischen Form aufweisen.

**6.** Platte (10) nach einem der vorstehenden Ansprüche, wobei sie eine gebogene allgemeine Form aufweist und konfiguriert ist, um einen Sektor einer ringförmigen Hülle zum Wärmetausch und zur Geräuschminderung, beispielsweise für eine Turbomaschinengondel zu bilden.

**7.** Platte (10) nach einem der vorstehenden Ansprüche, wobei die Kanäle (30) einen konstanten Querschnitt oder eine zu den Hohlräumen (20) ausgestellte allgemeine Form aufweisen.

**8.** Platte (10) nach einem der vorstehenden Ansprüche, wobei mindestens bestimmte der Hohlräume (20) miteinander kommunizieren.

**9.** Platte (10) nach einem der vorstehenden Ansprüche, wobei die Kanäle (30) zur externen Oberfläche (22) im Wesentlichen senkrechte oder im Verhältnis zur externen Oberfläche (22) geneigte Längsachsen aufweisen.

**10.** Turbomaschine, im Speziellen eines Luftfahrzeugs, **dadurch gekennzeichnet, dass** sie mindestens eine Platte (10) nach einem der vorstehenden Ansprüche umfasst.

**Claims**

**1.** Heat exchange and noise reduction panel (10) for a turbine engine, in particular of an aircraft, the panel comprising:

- an outer surface (22) which is intended for being swept over by an air flow and from which fins (26) extend in a first predetermined main direction and a second predetermined main direction, which directions are preferably substantially perpendicular,

- recesses (20) which form Helmholtz resonators and are connected to first ends of air-passage channels (30), second ends of which communicate with said air flow, such that said channels form necks of said Helmholtz resonators that extend substantially in the first direction of the fins,

- at least one oil circulation chamber (16) which extends between said outer surface and said at least one recess and is intended for discharging thermal energy generated by the oil,

the stack consisting of said outer surface, said at least one recess and said at least one chamber extending substantially in the first direction, **characterised in that** said channels are formed at least in part inside said fins.

2. Panel (10) according to claim 1, wherein the fins (26) are substantially normal or inclined with respect to the outer surface (22).

3. Panel (10) according to either claim 1 or claim 2, wherein said channels open onto walls of the fins to form openings (32) for communicating with the sound source to be attenuated.

4. Panel (10) according to any of the preceding claims, wherein a plurality of channels (30) pass through each fin (26).

5. Panel (10) according to any of the preceding claims, wherein the channels (30) have a substantially rectangular, circular or elliptical cross section.

6. Panel (10) according to any of the preceding claims, wherein said panel has a curved general shape and is designed to form a sector of an annular heat exchange and noise reduction casing, for example for a turbine engine nacelle.

7. Panel (10) according to any of the preceding claims, wherein the channels (30) have a constant cross section or a general shape which is flared towards said recesses (20).

8. Panel (10) according to any of the preceding claims, wherein at least some of said recesses (20) communicate with one another.

9. Panel (10) according to any of the preceding claims, wherein said channels (30) have longitudinal axes which are substantially perpendicular to said outer surface (22) or inclined with respect to said outer surface (22).

10. Turbine engine, in particular of an aircraft, **characterised in that** said engine comprises at least one panel (10) according to any of the preceding claims.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011303398 A
- US 8544531 B1